Europäisches Patentamt

European Patent Office

Office européen des brevets

(11) Veröffentlichungsnummer: **0 319 893**
**A1**

# EUROPÄISCHE PATENTANMELDUNG

(21) Anmeldenummer: **88120290.7**

(51) Int. Cl.⁴: **B01D 29/48**

(22) Anmeldetag: **05.12.88**

(30) Priorität: **10.12.87 DE 3741952**

(43) Veröffentlichungstag der Anmeldung:
**14.06.89 Patentblatt 89/24**

(84) Benannte Vertragsstaaten:
**CH DE GB IT LI**

(71) Anmelder: **Altenburger Electronic GmbH
Postfach 40
D-7633 Seelbach(DE)**

(72) Erfinder: **Siegfried, Hans-Günther
Ludwig-Thoma-Strasse 15
D-8520 Erlangen(DE)**

(74) Vertreter: **Eder, Eugen, Dipl.-Ing. et al
Patentanwälte Dipl.-Ing. E. Eder Dipl.-Ing. K.
Schieschke Elisabethstrasse 34
D-8000 München 40(DE)**

(54) Verfahren zur Herstellung eines Filters für Mikro- und Ultrafiltrationen.

(57) Das Verfahren zur Herstellung eines Filters für Mikro- und Ultrafiltrationen verwendet Metall-, Glas- oder Kunststoffdrähte, Fasern oder Bänder, deren Querschnitt Sekanten unterschiedliche Länge besitzt. Die Drähte, Fasern oder Bänder werden auf wenigstens einer Seite des Filters bis auf eine Sekante vorbestimmter Länge abgeschliffen.

## FIG. 1

EP 0 319 893 A1

## Verfahren zur Herstellung eines Filters für Mikro- und Ultrafiltrationen

Die Erfindung betrifft ein Verfahren zur Herstellung eines Filters für Mikro- und Ultrafiltrationen mit den Merkmalen des Oberbegriffs des Patentanspruches 1.

Es ist bekannt, Flachfilter oder Rohrfilter aus spiralförmig gewickelten Drähten, Fasern oder Bändern herzustellen. Die Fasern, Bänder oder Drähte können aus Metall, Kunststoff oder anorganischem Material, z.B. Glas, bestehen. Diese bekannten Filter besitzen den Nachteil, daß sie bei Verwendung zur Querstromfiltration den Widerstand des längs der Oberfläche des Filters fließenden Filtermediums unnötig erhöhen und zudem die Gefahr des Zusetzens der Porenfläche erheblich vergrößern. Zudem können sie sehr dünne zusätzliche Selektionsschichten (z.B. ionenselektive Trennschichten und andere Trennmedien) nicht sicher abstützen.

Der Erfindung liegt die Aufgabe zugrunde, ein Verfahren zur Herstellung eines Filters für Mikro- und Ultrafiltrationen so zu verbessern, daß der Strömungswiderstand bei der Querstromfiltration verringert, die Gefahr des Verstopfens der Porenöffnungen herabgesetzt und die Abstützung sehr dünner Selektionsschichten ermöglicht wird.

Die Erfindung löst diese Aufgabe mit den kennzeichnenden Merkmalen des Patentanspruches 1.

Dadurch, daß wenigstens die eine Seite des Filters geschliffen wird, werden die von den Drähten, Fasern oder Bändern gebildeten Vorsprünge eingeebnet, wodurch der Strömungswiderstand des strömenden Mediums über die Oberseite des Filters hinweg verringert wird. Dadurch, daß die sich in die Poren absetzenden Teilchen durch das darüberströmende Medium immer wieder herausgerissen werden, wird die Gefahr des Verstopfens erheblich verringert.

Nach einer weiteren Ausgestaltung kann auf die abgeschliffene Seite des Filters eine die Porengrößen bestimmende Membran (Selektionsschicht) aufgebracht werden. Da diese Selektionsschicht nurmehr die Poren selbst ungestützt zu überspannen hat, können auch sehr dünne Selektionsschichten benutzt werden.

Weitere Ausgestaltungen der Erfindungen ergeben sich aus den Unteransprüchen.

Die Erfindung wird nachfolgend anhand von in der Zeichnung dargestellten Ausführungsbeispielen näher erläutert. In der Zeichnung zeigen:

Fig. 1 eine perspektivische Ansicht eines spiralförmig gewickelten, flachen Filters;

Fig. 2 eine Ansicht, teilweise im Schnitt eines spiralförmig gewickelten Rohrfilters,

Fig. 3 einen Teilschnitt der Wandung der Filter nach Fig. 1 bzw. Fig. 2, teilweise im Ausgangszustand und teilweise im abgeschliffenen Zustand.

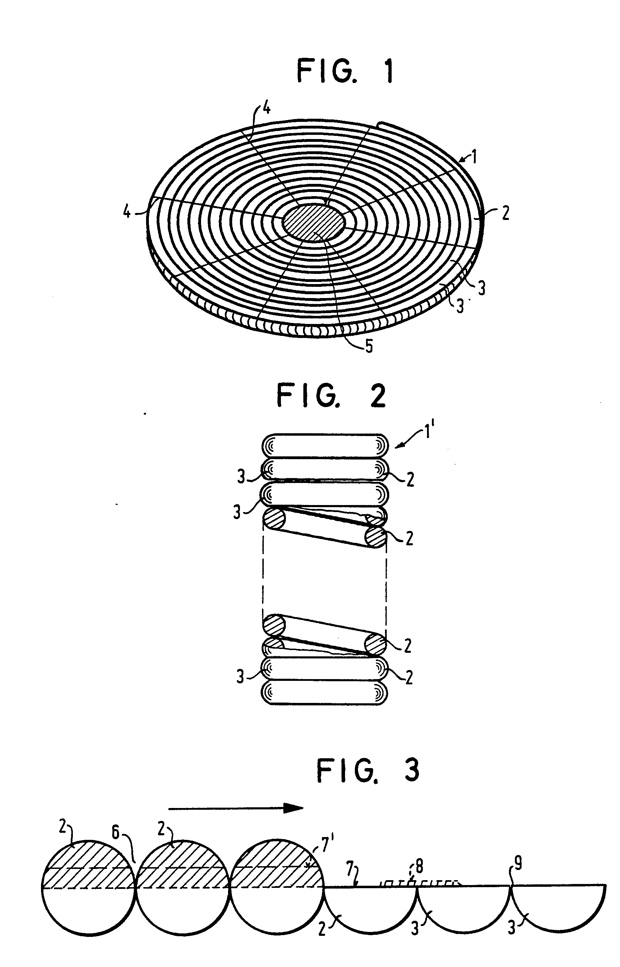

Das Filter 1 nach Fig. 1 kann aus Fasern, Bändern oder Drähten 2 aus Metall, Kunststoff oder anorganischem Material, z. B. Glas, spiralförmig in einer Ebene gewickelt, hergestellt werden. Der zwischen zwei Windungen 3 gebildete Spalt bestimmt die Filterwirkung. Dieser Spalt kann auch als Pore aufgefaßt werden. Er bestimmt demnach auch die Porengröße.

Das Wickeln der Fasern, Bänder oder Drähte 2 erfolgt unter Spannung. Diese versucht zwei benachbarte Windungen 3 einander zu nähern.

Der Filterspalt (Porenfläche) ist durch den Grad der Wickelkonstanz und die Präzision der verwendeten Fasern, Bänder oder Drähte 2 bestimmt.

Die benachbarten Windungen 3 des Filters 1 können zueinander festgelegt werden, z.B. durch radiale Schweißnähte, vorzugsweise Laserschweißnähte 4 oder aufgelegte Drähte mit niedrigerem Schmelzpunkt als die Windungen 3. Durch Schmelzen der Drähte und Haftvermittlung entsteht die Festlegung der Windungen 3. Auch andere Verbindungsmethoden, z.B. Kleben oder dgl., wären möglich.

Die Filtermitte ist durch einen Kern 5 geschlossen. Statt in einer Ebene kann das Filter 1' auch durch eine spiralförmige Wicklung von Fasern, Bändern oder Drähten 2 auch rohrförmig ausgebildet sein, z.B. nach Fig. 2. Auch hier bilden benachbarte Windungen 3 einen die Filterwirkung bestimmenden Spalt und damit die Porengröße des Filters. Auch hier werden die Windungen 3 wieder unter hoher Spannung gewickelt. Nicht dargestellte Vorrichtungen können den Spaltabstand der Windungen auf gewünschte Größen einstellen.

Es wären auch andere geometrische Filterformen denkbar.

Auch bei dem Rohrfilter 1' können benachbarte Windungen 3 wiederum in ihrer Lage zueinander festgelegt werden, z.B. durch Längsschweißnähte, vorzugsweise durch Laserschweißen oder dgl.

Werden Flachfilter 1 bzw. Rohrfilter 1' für die Querstromfiltration verwendet, bei der das zu filtrierende Medium über die Oberseite des Flachfilters 1 bzw. die Oberfläche des Rohrfilters 1' strömt, wirken die Erhebungen benachbarter Windungen nachteilig. Sie erhöhen den Strömungswiderstand unnötig und erleichtern das Zusetzen der von benachbarten Windungen gebildeten Zwischenräume 6.

Um den Strömungswiderstand des in der angegebenen Pfeilrichtung in Fig. 3 strömenden Filtermediums zu verringern und das Zusetzen der Zwischenräume 6 und damit der Porenflächen zu vermeiden, können die Fasern, Bänder oder Drähte 2 parallel zur Strömungsrichtung des zu filtrierenden Mediums abgeschliffen werden. Der abzuschleifende Bereich bei Drähten 2 mit kreisförmigem Querschnitt ist in Fig. 3 schraffiert dargestellt. Der rechte Teil der Fig. 3 zeigt den abgeschliffenen Zustand. Das Abschleifen erfolgte hierbei bis zur Sekante größter Länge 7. Diese entspricht dem Durchmesser des Drahtes 2.

Es ist auch möglich, das Abschleifen nur bis zu einer Sekante 7' vorbestimmter Länge vorzunehmen.

Bei einem solchen Flachfilter 1 oder Rohrfilter 1' mit abgeschliffenen Fasern, Bändern oder Drähten 2 besteht die Möglichkeit eine in Fig. 3, rechter Teil, strichliert angegebene Selektionsschicht 8 aufzubringen. Diese arbeitet im Molekularbereich. Das Flachschleifen der stützenden Fasern, Bänder oder Drähte 2 bietet den Vorteil, daß die ungestützte Weite zwischen zwei benachbarten Windungen 3 für diese Selektionsschicht 8 verringert wird. Somit können auch sehr dünne Selektionsschichten 8 angewendet werden. Die Selektionsschicht 8 hat dann nurmehr die von den Windungen 3 gebildeten Poren 9 selbst zu überspannen.

**Ansprüche**

1. Verfahren zur Herstellung eines Filters für Mikro- und Ultrafiltrationen unter Verwendung von Metall-, Glas-oder Kunststoffdrähten, Fasern oder Bändern, deren Querschnitt Sekanten unterschiedlicher Länge besitzt, dadurch gekennzeichnet, daß die Drähte, Fasern oder Bänder (2) auf wenigstens einer Seite des Filters (1; 1') bis auf eine Sekante (7; 7') vorbestimmter Länge abgeschliffen werden.

2. Verfahren nach Anspruch 1, dadurch gekennzeichnet, daß die Drähte, Fasern oder Bänder (2) bis auf eine Sekante (7) größter Länge abgeschliffen werden.

3. Verfahren nach den Ansprüchen 1 oder 2, dadurch gekennzeichnet, daß beide Filterseiten abgeschliffen werden.

4. Verfahren nach den Ansprüchen 1, 2 oder 3, dadurch gekennzeichnet, daß auf das Filter (1; 1') auf wenigstens einer seiner abgeschliffenen Seiten eine die Porengrößen (9) bestimmende Membran (8) aufgebracht wird.

5. Verfahren nach Anspruch 1, dadurch gekennzeichnet, daß die Windungen (3) in ihrer Lage zueinander festgelegt werden.

6. Verfahren nach Anspruch 5, dadurch gekennzeichnet, daß die Festlegung der Lage der Windungen (3) durch Schweißnähte, Auflageschmelzverbindungen oder durch Kleben erfolgt.

FIG. 1

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A- 349 145 (T.W. ELEY)<br>* Seite 2, Zeilen 53-101 *<br>--- | 1,2,5,6 | B 01 D 29/48 |
| X | US-A-2 699 260 (T.R. KOMLINE)<br>* Spalte 2, Zeilen 75-81; Spalte 3, Zeilen 1-9 *<br>--- | 1 | |
| A | DE-A-3 522 725 (ALTENBURGER ELECTRONIC)<br>* Spalte 3, Zeilen 18-20 *<br>----- | 4 | |

RECHERCHIERTE
SACHGEBIETE (Int. Cl.4)

B 01 D

Der vorliegende Recherchenbericht wurde für alle Patentansprüche erstellt

| Recherchenort | Abschlußdatum der Recherche | Prüfer |
|---|---|---|
| DEN HAAG | 22-02-1989 | KERRES P.M.G. |